Europäisches Patentamt

European Patent Office

Office européen des brevets

(11) Veröffentlichungsnummer : **0 346 731 B1**

# (12) EUROPÄISCHE PATENTSCHRIFT

(45) Veröffentlichungstag der Patentschrift :
**14.10.92 Patentblatt 92/42**

(21) Anmeldenummer : **89110204.8**

(22) Anmeldetag : **06.06.89**

(51) Int. Cl.⁵ : **F04D 13/06,** F04D 13/08,
H02K 5/132

(54) **Tauchpumpe.**

(30) Priorität : **11.06.88 DE 3820005**

(43) Veröffentlichungstag der Anmeldung :
**20.12.89 Patentblatt 89/51**

(45) Bekanntmachung des Hinweises auf die
Patenterteilung :
**14.10.92 Patentblatt 92/42**

(84) Benannte Vertragsstaaten :
**FR GB IT**

(56) Entgegenhaltungen :
**DE-A- 3 642 727**
**GB-A- 965 007**
**GB-A- 1 238 835**

(73) Patentinhaber : **GRUNDFOS INTERNATIONAL
A/S
7-11, Poul Due Jensensvej
DK-8850 Bjerringbro (DK)**

(72) Erfinder : **Jensen, Niels Due
Pilevej 11
DK-8850 Bjerringbro (DK)**
Erfinder : **Mikkelstrup, Poul Erik
Stenvagen 17
DK-8850 Bjerrigbro (DK)**

(74) Vertreter : **Wilcken, Hugo, Dr. et al
Patentanwälte Dr. Hugo Wilcken Dipl.-Ing.
Thomas Wilcken Musterbahn 1
W-2400 Lübeck (DE)**

## Beschreibung

Die Erfindung betrifft ein Tauchpumpenaggregat gemäß dem Oberbegriff des Anspruches 1.

Tauchpumpenaggregate sind Maschinensätze, die zeitweise oder ständig in einer zu fördernden Flüssigkeit liegen.Beim Einbau in Bohrbrunnen und bei der Förderung von Wasser werden sie auch Unterwassermotorpumpen genannt.Auf dem letztgenannten Gebiet ist der Einsatz der vorliegenden Erfindung besonders vorteilhaft.

Da die Kosten eines Brunnens mit dem Bohrungsdurchmesser steigen, ist es erstrebenswert, Pumpenaggregate mit kleinen Außendurchmessern und mit hoher Drehzahl zu bauen, um dieselbe Pumpleistung zu erzielen wie bei einer Pumpe mit niedrigerer Drehzahl, aber größerem Außendurchmesser.

Die dazu erforderliche Erhöhung der Drehzahl der Pumpe setzt das Ansteuern des Aggregates durch eine dementsprechende Einrichtung z.B. durch einen Frequenzumrichter voraus.

Generell ist heutzutage die Tendenz zu beobachten, alle Teile eines Pumpenaggregates zu einer baulichen Einheit zusammenzufassen. So ist es beispielsweise aus der EP-PS 0100 390 bekannt, die drei Teile Motor, Frequenzumricher und Pumpenstufe in einem Gehäuse zusammenzufassen, wobei allerdings die Pumpe gemäß der zitierten Patentschrift lediglich einstufig ist, deren Laufradform entsprechend der spezifischen Drehzahl ausgewählt ist. Das Zusammenfassen der genannten Baugruppen erfolgt in diesem Fall dadurch, daß der Frequenzumrichter seitlich neben dem Motor in einem vom Motor getrennten Raum angeordnet ist.

Die Herstellung eines derartigen Aggregates ist relativ aufwendig und damit teuer. Darüber hinaus eignen sich die aus dem Stand der Technik bekannten konstruktiven Maßnahmen für die Zusammenfassung der genannten Baugruppen zu einem Aggregat nicht für die Ausführung als Unterwassermotorpumpe mit hoher hydraulischer Leistung für kleine Brunnendurchmesser.

Eine Entwicklung zur Lösung der oben dargelegten Problematik ist in DE 36 42 727 A1 beschrieben. Diese Entwicklung stammt aus eigenem Hause, die vorzitierte Druckschrift ist nachveröffentlicht. Bei dem dort beschriebenen Tauchpumpenaggregat ist der Frequenzumrichter in dem gemeinsamen Aggregatgehäuse angeordnet und liegt innerhalb der durch Motor und Pumpe bestimmten Außenkontur dieses Gehäuses, und zwar z.B. unterhalb des Motors oder unterhalb der Pumpe. Um die im Frequenzumrichter entstehende Verlustwärme abführen zu können, ist bei den dort beschriebenen Ausführungen, bei denen der gesamte Frequenzumrichter als geschlossene Kapsel ausgebildet ist, die Kapsel mit einem Wärmeleitmedium aufgefüllt, so daß die Wärmeabfuhr durch Stofftransport nach Art eines Wärmerohres erfolgt. Eine solche Bauart löst zwar die oben beschriebene Problematik, ist jedoch vergleichsweise kostenintensiv in der Herstellung, so daß für bestimmte Bauarten eine kostengünstigere Lösung gesucht wird.

Dementsprechend liegt der vorliegenden Erfindung die Aufgabe zugrunde, ein Tauchpumpenaggregat der eingangs genannten Art so weiterzuentwickeln, daß es kostengünstig hergestellt und in einer Bohrung mit minimalem Durchmesser einfach installiert werden kann.

Die Aufgabe wird gelöst durch ein Tauchpumpenaggregat mit den Merkmalen des Anspruches 1.

Weitere vorteilhafte Ausgestaltungen ergeben sich aus den Unteransprüchen.

Durch die beschriebene Reihenanordnung der drei Baugruppen Motor, Pumpenkörper und Frequenzumrichter übereinander in einem röhrenförmigen Mantel ist das Aggregat als ein einfach in das Bohrloch einzuführender Zylinder mit gleichbleibendem minimalem Außendurchmesser ausgestaltet.

Das Spaltrohr des Motors ist als geschlossener Topf mit eingeschobenem, gut wärmeleitendem Boden ausgebildet, welcher an seiner offenen Seite mit dem Mantel des Aggregates verbunden ist, so daß der Statorraum des Motors vom Pumpenkörper flüssigkeitsdicht und druckfest getrennt ist. Dies gestattet die Anordnung des Frequenzumrichters in dem trockenen Statorraum. Diese Möglichkeit vereinfacht die Fertigung des Aggregates erheblich und wird als wesentliche Weiterentwicklung gegenüber dem zitierten Stand der Technik angesehen.

Da bei jedem Vermindern der Abmessungen Probleme beim Abführen der Verlustwärme entstehen, wird der Spaltrohrtopf aus Teilen unterschiedlicher Materialien hergestellt.

Wo es seitens der Elektrotechnik gefordert wird, verwendet man Chromnickel-Stahl. Der Boden, an dem der Frequenzumrichter befestigt ist, besteht jedoch aus sehr gut wärmeleitendem Material z.B. Kupfer. Beide Teile werden dann flüssigkeitsdicht zu einer Baueinheit zusammengefügt.

Da der Motor als Naßläufer-Motor ausgeführt ist, ist sein Rotorraum mit Flüssigkeit gefüllt. Aufgrund der Anordnung der Verlustwärme erzeugenden und temperaturempfindlichen Leistungselektronik des Frequenzumrichters am Boden des Spaltrohrtopfes im Statorraum sind die Stromwärmeverluste bei kleinstmöglichem Wärmewiderstand an die Flüssigkeit im Rotorraum des Motors abführbar, womit eines der größten Probleme, die bei der Zusammenfassung der genannten Baugruppen zu einem Aggregat auftreten, gelöst wird.

Zur Reduzierung des Wärmewiderstandes zwischen der Leistungselektronik des Frequenzumrichters und der im Rotorraum des Motors befindlichen Flüssigkeit kann die Verwendung eines wärmeleitenden Mediums wie Wärmeleitpaste, Lot oder Kleber zwischen der Leistungselektronik und dem Boden des Spaltrohrtopfes dienen. Die Verwendung eines Klebers oder eines Lotes hat darüber hinaus den Vorteil, daß diese nicht nur Wärme leiten können, sondern auch eine mechanische Verbindung der Bauelemente ermöglichen.

Um die Installation des Tauchpumpenaggregates weiter zu vereinfachen, kann das elektrische Versorgungskabel im Gegensatz zu der sonst üblichen Führung am Äußeren des Pumpenkörpers an der Stirnseite des Aggregates in dieses eingeführt sein, innerhalb des Mantels verlaufen und flüssigkeitsdicht und druckfest gegenüber dem Spaltrohrtopf abgedichtet in den Statorraum eingeführt sein. Diese vorteilhafte Kabelführung im Inneren des Aggregates ist eine wirksame Maßnahme zur Vorbeugung des Auftretens von Beschädigungen am Kabel, insbesondere beim Einführen des Aggregates in das Bohrloch.

Um größere Toleranzen zulassen zu können und damit die Fertigung zu vereinfachen, wird das Axiallager des Aggregates selbsteinstellend ausgeführt.

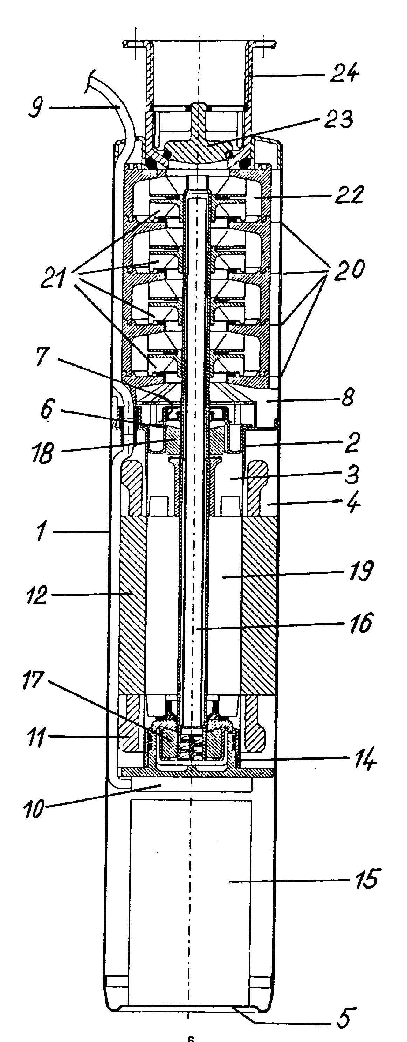

Die Erfindung ist anhand der einzigen Zeichnung näher erläutert. Diese zeigt ein Ausführungsbeispiel des Pumpenaggregates im Längsschnitt.

Das Tauchpumpenaggregat weist einen zylindrischen Mantel 1 auf. Dieser Mantel 1 nimmt die drei Baugruppen Frequenzumrichter, Motor und Pumpenkörper auf.

Im unteren Teil des Aggregates ist der mit dem Mantel 1 verschweißte Spaltrohrtopf 2 angeordnet, der den Rotorraum 3 des Naßläufer-Motors von dessen Statorraum 4 und darüber hinaus den Statorraum 4 vom Pumpenkörper flüssigkeitsdicht und druckfest trennt. Die Verbindung des Spaltrohrtopfes 2 mit dem Mantelinneren erfolgt in geeigneter Weise, vorzugsweise durch Schweißen.

Der Statorraum 4 ist zur Umgebung hin durch einen Boden 5 abgeschlossen. Der Rotorraum 3 ist durch einen Lagerträger 6 und durch eine Dichtung 7 vom Pumpensaugraum 8 abgetrennt.

Die elektrische Energie wird durch das Kabel 9 in das Aggregat eingeleitet und zu dem im gegenüber dem Pumpenkörper durch den Spaltrohrtopf 2 abgedichteten und daher trockenen Statorraum 4 befindlichen Frequenzumrichter 10 geführt, über den die Wicklungen 11 des Stators 12 versorgt werden.

Im dargestellten Ausführungsbeispiel ist das Kabel 9 im Inneren des Mantels 1 geführt, wodurch es wirksam vor Beschädigungen geschützt ist.

Der Boden 14 des Spaltrohrtopfes 2 besteht aus einem sehr gut wärmeleitenden Material, so daß die Verlustwärme der Leistungselektronik des Frequenzumrichters 10 durch die im Rotorraum 3 befindliche Flüssigkeit abführbar ist. Der übrige Teil des Spaltrohrtopfes 2, durch den der magnetische Fluß zum Antrieb des Motors tritt, besteht aus einem anderen geeigneten Material, beispielsweise Chromnickel-Stahl.

Um die Wärmeleitwiderstände des Überganges zwischen der Leistungselektronik des Frequenzumrichters 10 und dem Boden 14 des Spaltrohrtopfes 2 zu reduzieren, kann die Kontaktfläche mit einem wärmeleitenden Medium versehen sein. In Betracht kommt hier etwa eine Wärmeleitpaste, ein Lot oder ein wärmeleitender Kleber. Die Verwendung eines Lotes oder eines Klebers hat darüber hinaus den Vorteil, daß durch sie eine mechanische Verbindung der Bauelemente ermöglichen.

Die gemeinsame Welle 16 des Aggregates wird in den Lagern 17 und 18 geführt und im selbsteinstellenden Drucklager axial abgestützt. Die Welle 16 trägt den Rotor 19.

Das als vierstufige Pumpe dargestellte Aggregat saugt das Wasser durch Saugöffnungen 20 im Mantel 1 im Bereich des Pumpenkörpers an. Das Wasser wird vom Laufrad 21 in die Stufenkammer 22 gedrückt und den Rückführschaufeln der nächsten Stufe zugeleitet. Es verläßt das Aggregat unter Druck über das Rückschlagventil 23 durch den Druckstutzen 24.


## Patentansprüche

1. Tauchpumpenaggregat mit einem Naßläufer-Motor, dessen Drehzahl und/oder Drehmoment mit einem Frequenzumrichter veränderbar sind, und mit einem Pumpenkörper, dadurch gekennzeichnet,
daß der Frequenzumrichter (10), der Naßläufer-Motor und der Pumpenkörper übereinander in einem röhrenförmigen Mantel (1) angeordnet sind,
daß der Motor ein als geschlossenen Topf ausgebildetes Spaltrohr (2) aufweist, welcher den Statorraum (4) vom Pumpenkörper flüssigkeitsdicht und druckfest trennend mit dem Mantel (1) verbunden ist, und daß der Frequenzumrichter (10) in dem Statorraum (4) so eingebaut ist, daß seine Leistungselektronik am Boden des Spaltrohrtopfes (2) im Statorraum (4) angeordnet ist.

2. Tauchpumpenaggregat nach Anspruch 1, dadurch gekennzeichnet, daß der Spaltrohrtopf (2) aus einem Chromnickel-Stahlteil und einem Kupfer-Boden (14) besteht, die flüssigkeitsdicht verbunden sind.

3. Tauchpumpenaggregat nach Anspruch 2 oder 3, dadurch gekennzeichnet, daß die Wärmeleitwiderstände der Übergänge zwischen der Leistungselektronik des Frequenzumrichters (10) und dem Boden (14) des Spaltrohrtopfes (2) mit einem wärmeleitenden Medium reduziert sind.

4. Tauchpumpenaggregat nach Anspruch 3, dadurch gekennzeichnet, daß das wärmeleitende Medium ein Lot ist.

5. Tauchpumpenaggregat nach Anspruch 3, dadurch gekennzeichnet, daß das wärmeleitende Medium ein Kleber ist.

6. Tauchpumpenaggregat nach einem der Ansprüche 1 bis 5, dadurch gekennzeichnet, daß das elektrische Versorgungskabel (9) an der Stirnseite des Aggregates in dieses eingeführt ist, innerhalb des Mantels (1) verläuft und flüssigkeitsdicht und druckfest gegenüber dem Spaltrohrtopf (2) abgedichtet in den Statorraum (4) eingeführt ist.

7. Tauchpumpenaggregat nach einem der Ansprüche 1 bis 6, dadurch gekennzeichnet, daß das Axiallager des Aggregates selbsteinstellend (ballig) ausgeführt ist.


## Claims

1. Submergible pump assembly having a wet-running motor, the speed and/or torque of which can be changed with a frequency converter, and having a pump body, characterised
   in that the frequency converter (10), the wet-running motor and the pump body are arranged one above the other in a tubular casing (1),
   in that the motor has a split-tube (2) in the form of a closed vessel which connects the stator chamber (4) to the casing (1) so as to be separated in a fluid and pressure-tight manner from the pump body, and
   in that the frequency converter (10) is incorporated within the stator chamber (4) in such a way that its power electronics are arranged in the base of the split-tube vessel (2) of the stator chamber (4).

2. Submergible pump assembly, according to claim 1, characterised in that the split-tube vessel (2) consists of a nickel-chromium steel part and a copper base (14) which are connected in a fluid-tight manner.

3. Submergible pump assembly according to claim 2 or 3, characterised in that the heat-conducting resistances of the transitions between the power electronics of the frequency converter (10) and the base (14) of the split-tube vessel (2) are reduced with a heat-conducting medium.

4. Submergible pump assembly according to claim 3, characterised in that the heat-conducting medium is a solder.

5. Submergible pump assembly according to claim 3, characterised in that the heat-conducting medium is an adhesive.

6. Submergible pump assembly according to one of the claims 1 to 5, characterised in that the electrical supply cable (9) is introduced into the assembly through the front face of the same, runs inside the casing (1) and is introduced into the stator chamber (4) so as to be sealed in a fluid and pressure-tight manner with respect to the split-tube vessel (2).

7. Submergible pump assembly according to one of the claims 1 to 6, characterised in that the axial bearing of the assembly is arranged to be self-adjusting (convex).


## Revendications

1. Groupe formant pompe submersible comportant un moteur à rotor du type humide, dont la vitesse de rotation et/ou le couple peuvent être modifiés par un convertisseur de fréquence, et comportant un corps de pompe, caractérisé
   en ce que le convertisseur de fréquence (10), le moteur à rotor du type humide et le corps de pompe sont disposés les uns au-dessus des autres dans une enveloppe (1) de forme tubulaire,
   en ce que le moteur comporte une gaine (2) réalisée sous la forme d'un pot fermé, qui est reliée à l'enveloppe (1) en séparant l'espace de stator (4) du corps de pompe, de manière étanche aux liquides et résistante à la pression, et

en ce que le convertisseur de fréquence (10) est incorporé dans l'espace de stator (4) de manière à ce que son électronique de puissance soit disposée au fond de la gaine en forme de pot (2), dans l'espace de stator (4).

2. Groupe formant pompe submersible selon la revendication 1, caractérisé en ce que la gaine en forme de pot (2) est constituée d'une partie en acier au nickel-chrome et d'un fond en cuivre (14), qui sont reliés entre-eux de manière étanche aux liquides.

3. Groupe formant pompe submersible selon la revendication 2 ou 3, caractérisé en ce que les inerties thermiques des transitions entre l'électronique de puissance du convertisseur de fréquence (10) et le fond (14) de la gaine (2) sont réduites à l'aide d'un agent caloporteur.

4. Groupe formant pompe submersible selon la revendication 3, caractérisé en ce que l'agent caloporteur est un métal d'apport de brasage.

5. Groupe formant pompe submersible selon la revendication 3, caractérisé en ce que l'agent caloporteur est une colle.

6. Groupe formant pompe submersible selon l'une des revendications 1 à 5, caractérisé en ce que le câble d'alimentation électrique (9) est introduit dans le groupe à la surface frontale de celui-ci, s'étend à l'intérieur de l'enveloppe (1) et est introduit dans l'espace de stator (4) étanche aux liquides et résistant à la pression, vis-à-vis de la gaine en forme de pot (2).

7. Groupe formant pompe submersible selon l'une des revendications 1 à 6, caractérisé en ce que le palier formant butée axiale du groupe est construit auto-réglable (bombé).